# EUROPEAN PATENT SPECIFICATION

(11) **EP 3 211 952 B1**
(45) Date of publication and mention of the grant of the patent: **21.11.2018**
(21) Application number: 15852587.3
(22) Date of filing: 03.02.2015
(51) Int. Cl.: H04W 72/08, H04J 11/00

(54) **JOINT INTERFERENCE REJECTION METHOD AND DEVICE, AND METHOD AND DEVICE FOR REALIZING UPLINK COMP**
GEMEINSAMES STÖRUNGSUNTERDRÜCKUNGSVERFAHREN UND VORRICHTUNG SOWIE VERFAHREN UND VORRICHTUNG ZUR DURCHFÜHRUNG VON UPLINK-COMP
PROCÉDÉ ET DISPOSITIF DE REJET CONJOINT DE BROUILLAGE, ET PROCÉDÉ ET DISPOSITIF POUR RÉALISER UNE COMP EN LIAISON MONTANTE

(30) Priority: 21.10.2014 CN 201410562482
(43) Date of publication of application: 30.08.2017
(73) Proprietor: ZTE Corporation, Shenzhen, Guangdong 518057 (CN)
(72) Inventor: LUO, Su, Shenzhen Guangdong 518057 (CN)
(74) Representative: Lavoix
(86) International application number: PCT/CN2015/072165
(87) International publication number: WO 2016/061942

(56) References cited:
- WO-A1-2012/035453
- WO-A1-2013/165283
- WO-A1-2013/179255
- CN-A- 102 395 163
- CN-A- 102 821 392
- CN-A- 103 516 412
- CN-A- 103 703 855

## Description

### TECHNICAL FIELD

The disclosure relates to the technical field of wireless communications, and in particular to a joint interference rejection method and device as well as a method and device for realizing uplink Coordinated Multi-Point Transmission/Reception (CoMP), and a storage medium.

### BACKGROUND

The CoMP technology is a technology for improving cell edge throughput, increasing high-speed data service coverage, and improving system throughput by reducing or eliminating same-frequency interference in a Long Term Evolution Advanced (LTE-A) network.

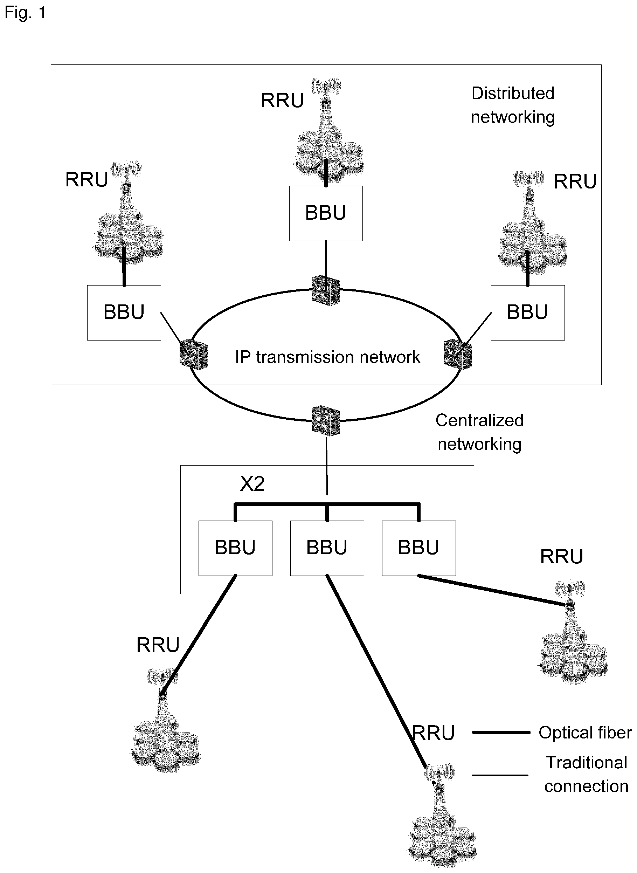

As shown in Fig. 1, at present, operators actually use two main CoMP networking scenarios, that is, centralized networking and distributed networking. The centralized networking refers to putting Base Band Units (BBU) of eNodeB together, and placing Radio Remote Radio Units (RRU) on a required station location, where the BBUs and the RRUs are connected through optical fibers, and the BBUs can also be directly connected to each other through the optical fibers, so as to realize X2 interface interaction. The distributed networking refers to directly placing the BBUs and the RRUs of the eNodeB on the required station location, and the BBUs of each eNodeB need to be connected to a public transmission network so as to realize the X2 interface interaction.

At present, in an uplink link direction of a CoMP system, the eNodeB realizes uplink CoMP by way of multi-cell joint reception and demodulation. A conception of uplink Joint Reception (JR) is proposed in the protocol, but a specific method for JR has not been provided, so manufacturers design solutions and algorithms to realize it. The current two modes most commonly used for realizing uplink CoMP include: joint equalization mode and joint soft bit combination mode. The joint equalization mode includes that: a primary cell sends cooperative information to a cooperative cell, the cooperative cell sends a result of uplink signal channel estimation back to the primary cell according to the cooperative information, and then the primary cell uses original antenna data of itself and the cooperative cell to perform joint equalization, so as to obtain a signal quality gain. The joint soft bit combination mode specifically includes that: the primary cell sends the cooperative information to the cooperative cell, the cooperative cell performs uplink signal channel estimation, equalization and soft bit computation according to the cooperative information, and sends a soft bit result back to the primary cell, and then the primary cell uses soft bit information of itself and the cooperative cell to perform joint soft bit combination, so as to obtain the signal quality gain.

The two modes have their own advantages and disadvantages, and each mode has specific best usage scenario. For the joint equalization mode, the advantage is that the primary cell obtains the original data of each antenna, and can make the best of various data combining algorithms (such as the Maximum Ratio Combining (MRC) algorithm and the Interference Rejection Combining (IRC) algorithm) to reduce and even eliminate inter-cell interference, so the UE obtains the maximum flow gain. The disadvantage of the joint equalization mode is the huge original data volume of multi-cell interactive antenna and the high complexity and that the application scenario is the in-module cell in the eNodeB. For the joint soft bit combination mode, the advantage is that: the amount of data interaction between the cooperative cells is smaller than that of joint equalization, and the processing complexity is lower than that of the joint equalization. However, the disadvantage is that the gain is lower than that of the joint equalization, and the application scenario is the cell in the eNodeB. If an inter-site delay is less than a delay threshold of joint soft bit combination (e.g. the centralized networking), the joint soft bit combination mode can also be used for realizing CoMP.

A data sending point of uplink CoMP is at a UE side. In the LTE system, the UE side sends subframe data in 1 ms, which requires the multi-point eNodeB to perform a series of processing, like signal demodulation, channel estimation, channel equalization, cooperative information interaction and signal combination, in 1ms, so as to achieve the purpose of obtaining a gain.

The CoMP requires that the cells or the eNodeBs perform cooperative information interaction through an X2 interface. In a commercial networking solution, only the centralized networking mode can meet the delay requirement of CoMP (completing all CoMP processing in 1ms). However, in the distributed networking mode, the transmission delay of each node of the commercial transmission network is greater than 1ms, and all the existing JR realizing modes (the joint equalization and the joint soft bit combination) cannot be used in a distributed network.

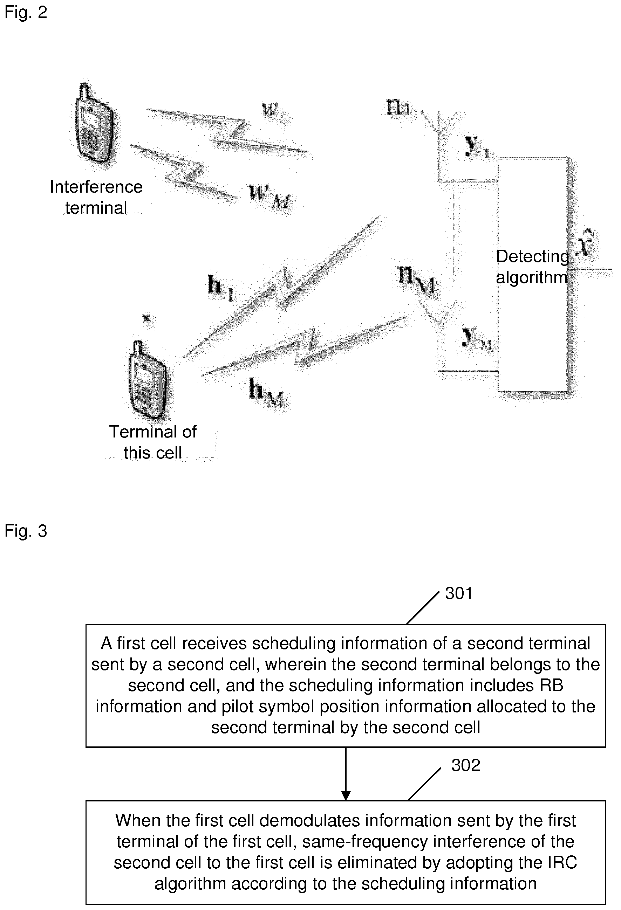

In addition, when interference is eliminated by adopting the IRC algorithm, the IRC algorithm does not determine the specific interference position of an adjacent cell, but can only blindly estimate signal interference of the adjacent cell in this cell, which causes the poor anti-interference capability of uplink CoMP. The principle of the existing IRC algorithm refers to Fig. 2, in which when the number of receiving antenna is greater than 1, using a weight matrix to perform linear combination on signals received by different antennas, so as to reject the interference caused by channel correlation. The more the receiving antennas are, the stronger is the capability of eliminating interference.

### SUMMARY

In order to solve at least one of the above problems, the disclosure provides a joint interference rejection method and device, a method and device for realizing uplink CoMP, and a storage medium, which can solve the technical problems that the current distributed network cannot realize the uplink CoMP and the anti-interference capability of uplink CoMP is poor.

The technical solutions of the disclosure are implemented as follows.

On the first aspect, a joint interference rejection method for realizing the uplink CoMP is provided, which includes that:
a first cell receives scheduling information of a second terminal sent by a second cell, and the second terminal belongs to the second cell, and the scheduling information includes Resource Block (RB) information and pilot symbol position information allocated to the second terminal by the second cell; and
when the first cell demodulates information sent by the first terminal of the first cell, same-frequency interference of the second cell to the first cell is eliminated by adopting an IRC algorithm according to the scheduling information.

On the second aspect, a joint interference rejection device for realizing the uplink CoMP is provided, which includes: a receiving unit and an interference rejection unit.

The receiving unit is configured to receive the scheduling information of the second terminal sent by the second cell, and the second terminal belongs to the second cell, and the scheduling information includes the RB information and the pilot symbol position information allocated to the second terminal by the second cell; and

the interference rejection unit is configured to, when the first cell demodulates information sent by the first terminal of the first cell, eliminate the same-frequency interference of the second cell to the first cell by adopting the IRC algorithm according to the scheduling information.

On the third aspect, in order to solve the problems in the prior art that once the uplink CoMP mode is determined, self-adaption cannot be realized according to the change of scenarios and conditions, and the best gain effect of CoMP cannot be achieved, a method for realizing uplink CoMP is also provided, which includes that:
when a first cell and a second cell needing to perform the uplink CoMP do not belong to the same eNodeB, a transmission delay between the eNodeB to which the first cell belongs and the eNodeB to which the second cell belongs is detected;
it is judged whether the transmission delay satisfies a pre-set time condition; if so, the uplink CoMP is realized by adopting the joint interference rejection method according to claim 1.

In an embodiment of the disclosure, the pre-set time condition includes that: the transmission delay is greater than a second delay and less than or equal to a first delay, and the first delay is the pre-set maximum delay of uplink CoMP.

In an embodiment of the disclosure, the second delay is the pre-set maximum delay of adopting the joint soft bit combination mode to realize the uplink CoMP.

In an embodiment of the disclosure, when the transmission delay is less than or equal to the second delay, the uplink CoMP is realized by adopting the joint soft bit combination mode.

In an embodiment of the disclosure, the method further includes that: when the first cell and the second cell needing to perform the uplink CoMP belong to the same eNodeB, it is judged whether the first cell and the second cell belong to the same base band module; if so, the uplink CoMP is realized by adopting the pre-set joint equalization mode; or else, the uplink CoMP is realized by adopting the pre-set joint soft bit combination mode.

On the fourth aspect, in order to solve the problems in the prior art that once the uplink CoMP mode is determined, self-adaption cannot be realized according to the change of scenarios and conditions, and the best gain effect of CoMP cannot be achieved, a device for realizing uplink CoMP is also provided, which includes: a detecting unit, a first judging unit and an executing unit.

The detecting unit is configured to, when the first cell and the second cell needing to perform the uplink CoMP do not belong to the same eNodeB, detect the transmission delay between the eNodeB to which the first cell belongs and the eNodeB to which the second cell belongs.

The first judging unit is configured to judge whether the transmission delay satisfies the pre-set time condition.

The executing unit is configured to, when the result of the first judging unit is yes, realize the uplink CoMP by adopting the joint interference rejection method according to claim 1.

In an embodiment of the disclosure, the pre-set time condition includes that: the transmission delay is greater than the second delay and less than or equal to the first delay, and the first delay is the pre-set maximum delay of uplink CoMP.

In an embodiment of the disclosure, the second delay is the pre-set maximum delay of adopting the joint soft bit combination mode to realize the uplink CoMP.

In an embodiment of the disclosure, the executing unit is configured to, when the transmission delay is less than or equal to the second delay, realize the uplink CoMP by adopting the joint soft bit combination mode.

In an embodiment of the disclosure, the device further includes a second judging unit.

The second judging unit is configured to, when the first cell and the second cell needing to perform the uplink CoMP belong to the same eNodeB, judge whether the first cell and the second cell belong to the same base band module.

The executing unit is further configured to, when the result of the second judging unit is yes, realize the uplink CoMP by adopting the pre-set joint equalization mode, and when the result of the second judging unit is no, realize the uplink CoMP by adopting the pre-set joint soft bit combination mode.

On the fifth aspect, a computer storage medium is provided, in which computer executable instructions are stored; the computer executable instructions are used for performing the joint interference rejection method provided in the embodiment of the first aspect.

On the sixth aspect, a computer storage medium is provided, in which computer executable instructions are stored; the computer executable instructions are used for performing the method for realizing uplink CoMP provided in the embodiment of the third aspect.

The beneficial effects of the disclosure are as follows:
the disclosure provides a joint interference rejection method and device, a method and device for realizing uplink CoMP, and a storage medium, which can be applied to various networking modes, scenarios and delays, and improve the anti-interference capability of uplink CoMP; specifically, the joint interference rejection method is used for realizing the uplink CoMP, and includes that: the first cell receives the scheduling information of the second terminal sent by the second cell, and the second terminal belongs to the second cell, and the scheduling information includes the RB information and the pilot symbol position information allocated to the second terminal by the second cell; and when the first cell demodulates the information sent by the first terminal of the first cell, the same-frequency interference of the second cell to the first cell is eliminated by adopting the IRC algorithm according to the scheduling information; according to the joint interference rejection method provided by the disclosure, the first cell (a cooperative cell or a serving cell) has eliminated the interference of an interference source and achieves the purpose of increasing an edge user gain, so there is no need to send a cooperative message to the second cell (the serving cell or the cooperative cell) where the interference source is; in such a manner, message interaction between the X2 interfaces is reduced, and the delay required by CoMP is also reduced, so the joint interference rejection method is applied to the distributed network; in addition, the first cell (the cooperative cell or the serving cell) can obtain the RB information and the pilot symbol position of the second terminal, so the first cell can determine the position of the interference source when performing the IRC algorithm; in such a manner, the effect of eliminating the interference of the interference source by adopting the IRC algorithm is enhanced, the anti-interference capability of CoMP achieves the best, and the cell edge throughput is further improved.

### BRIEF DESCRIPTION OF THE DRAWINGS

Fig. 1 is a schematic diagram of the existing CoMP networking scenario;
Fig. 2 is a principle diagram of the existing IRC algorithm;
Fig. 3 is a flowchart of a joint interference rejection method provided by embodiment 1 of the disclosure;
Fig. 4 is a flowchart of another joint interference rejection method provided by embodiment 1 of the disclosure;
Fig. 5 is a flowchart of a method for realizing uplink CoMP provided by embodiment 2 of the disclosure;
Fig. 6 is a flowchart of another method for realizing uplink CoMP provided by embodiment 2 of the disclosure;
Fig. 7 is a structure diagram of a joint interference rejection device provided by embodiment 3 of the disclosure;
Fig. 8 is a structure diagram of a device for realizing uplink CoMP provided by embodiment 3 of the disclosure; and
Fig. 9 is a structure diagram of another device for realizing uplink CoMP provided by embodiment 3 of the disclosure.

### DETAILED DESCRIPTION

The technical solutions of the disclosure are further elaborated below through the specific embodiments in combination with the accompanying drawings.

### Embodiment 1

Given the technical problem that the anti-interference capability of uplink CoMP is poor at present because the uplink CoMP cannot be realized for the distributed network, and the best effect cannot be achieved when an IRC algorithm is used to perform interference rejection, as shown in Fig. 3, the present embodiment provides a joint interference rejection method for realizing the uplink CoMP, which includes the following steps.

Step 301: a first cell receives scheduling information of a second terminal sent by a second cell. The second terminal belongs to the second cell, and the scheduling information includes RB information and pilot symbol position information allocated to the second terminal by the second cell.

The first cell in the present embodiment can be a serving cell or a cooperative cell in a CoMP system, and the second cell can be the cooperative cell or the serving cell in the CoMP system.

Step 302: when the first cell demodulates information sent by the first terminal of the first cell, same-frequency interference of the second cell to the first cell is eliminated by adopting the IRC algorithm according to the scheduling information.

In the present embodiment, the same-frequency interference of the second cell to the first cell includes the interference of the second cell to a first cell RB which is the same as that of the second cell, namely the interference when the two cells are on the same RB.

Because the RB information and the pilot symbol position information of an interference terminal can be obtained in Step 301, the method of the present embodiment can enable the first cell to determine the position of the interference source during performing the IRC algorithm, thereby enhancing the interference rejection effect, and making the anti-interference capability of uplink CoMP achieve the best. In addition, in the method of the present embodiment, the first cell (the cooperative cell or the serving cell) has eliminated the interference of the interference source and achieves the purpose of increasing an edge user gain, so there is no need to send a cooperative message to the second cell (the serving cell or the cooperative cell) where the interference source is. In such a manner, message interaction between the X2 interfaces is reduced, and the delay required by CoMP is also reduced. The method can be applied to the distributed network to enable the distributed network to realize the uplink CoMP.

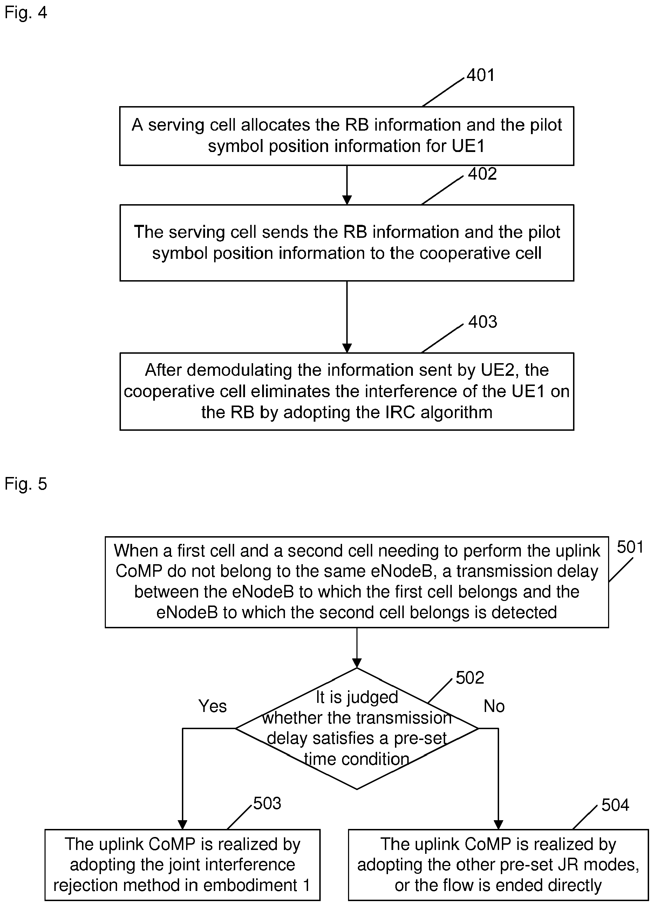

The method of the present embodiment is elaborated below by taking that the first cell is the cooperative cell and the second cell is the serving cell for example. As shown in Fig. 4, the method includes the following steps.

Step 401: the serving cell allocates the RB information and the pilot symbol position information for UE1.

Step 402: the serving cell sends the RB information and the pilot symbol position information to the cooperative cell.

Step 403: after demodulating the information sent by UE2, the cooperative cell eliminates the interference of the UE1 on the RB by adopting the IRC algorithm.

The uplink channel quality of the UE2 gets better through the above steps 401-403.

Similarly, when the first cell is the serving cell, and the second cell is the cooperative cell, the process of eliminating the same-frequency interference is similar to the steps 401-403. It is the serving cell that eliminates the same-frequency interference of the cooperative cell by adopting the IRC algorithm.

The method of the present embodiment can be applied to various networking modes, scenarios and delays, so that the uplink CoMP can be performed by using the method of the present embodiment in various networking modes, scenarios and delays. For example, in the distributed network, the eNodeB can also perform the uplink CoMP, so the same-frequency interference at the cell edge can be reduced, and the uplink throughput of a cell edge user can be improved.

### Embodiment 2

As shown in Fig. 5, the present embodiment provides a method for realizing uplink CoMP, which includes the following steps.

Step 501: when a first cell and a second cell needing to perform the uplink CoMP do not belong to the same eNodeB, a transmission delay between the eNodeB to which the first cell belongs and the eNodeB to which the second cell belongs is detected.

Step 502: it is judged whether the transmission delay satisfies a pre-set time condition; if so, Step 503 is performed; or else, Step 504 is performed.

Preferably, in this step, the pre-set time condition may include that: the transmission delay is greater than a second delay and less than or equal to a first delay, and the first delay is the pre-set maximum delay of uplink CoMP.

Preferably, when the system also pre-sets other JR modes, the second delay is the pre-set maximum delay of adopting the joint soft bit combination mode to realize the uplink CoMP.

Step 503: the uplink CoMP is realized by adopting the joint interference rejection method in embodiment 1.

Step 504: the uplink CoMP is realized by adopting the other pre-set JR modes, or the flow is ended directly.

In this step, the JR modes may include the joint soft bit combination mode or the joint equalization mode.

Specifically, when the transmission delay is less than or equal to the second delay (the pre-set maximum delay of adopting the joint soft bit combination mode to realize the uplink CoMP), the uplink CoMP is realized by adopting the joint soft bit combination mode.

When the transmission delay is greater than the first delay (the pre-set maximum delay of uplink CoMP), the flow is ended directly.

Considering the problems in the prior art that once the uplink CoMP mode is determined, self-adaption cannot be realized according to the change of scenarios and conditions, and the best gain effect of CoMP cannot be achieved, in combination with the modes for realizing uplink CoMP provided in the embodiment 1, the present embodiment provides a method for realizing uplink CoMP, which can adaptively select a proper mode to realize the uplink CoMP according to the transmission delay, and thus improve the throughput of the edge user and the whole throughput of the cell. When the transmission delay satisfies the pre-set condition, the uplink CoMP is realized by adopting the joint interference rejection method, and when the transmission delay does not satisfy the pre-set condition, the uplink CoMP can be realized by selecting the JR mode or the flow is ended directly. Especially when the joint interference rejection mode is adopted, according to the description of the embodiment 1, the anti-interference capability can be further improved, the channel quality can be further improved, and then the throughput of the edge user and the whole throughput of the cell can be improved.

Based on the above method, this method may further include that: when the first cell and the second cell needing to perform the uplink CoMP belong to the same eNodeB, it is judged whether the first cell and the second cell belong to the same base band module; if so, the uplink CoMP is realized by adopting the pre-set joint equalization method; or else, the uplink CoMP is realized by adopting the pre-set joint soft bit combination method.

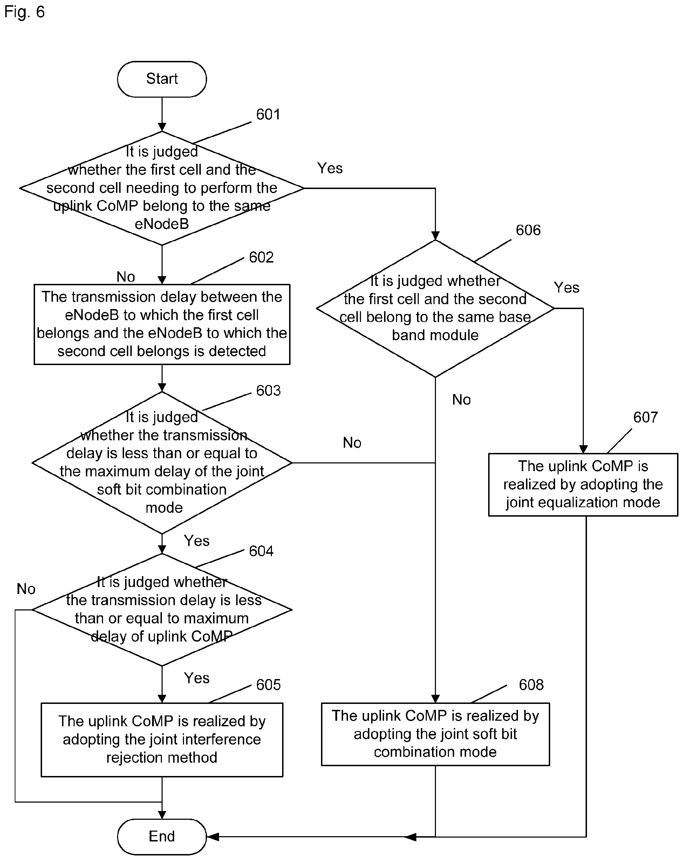

As shown in Fig. 6, the specific process of realizing the uplink CoMP provided by the present embodiment includes the following steps.

Step 601: it is judged whether the first cell and the second cell needing to perform the uplink CoMP belong to the same eNodeB; if so, Step 606 is performed; or else, Step 602 is performed.

In the present embodiment, the first cell can be the serving cell, and the second cell can be the cooperative cell. In the present embodiment, three modes for realizing the uplink CoMP are preconfigured, including the joint interference rejection method, the joint equalization mode, and the joint soft bit combination mode. Besides, the maximum delay of uplink CoMP and the maximum delay of the joint soft bit combination mode are preconfigured, and the latter is less than the former.

Step 602: the transmission delay between the eNodeB to which the first cell belongs and the eNodeB to which the second cell belongs is detected.

Step 603: it is judged whether the transmission delay is less than or equal to the maximum delay of the joint soft bit combination mode; if not, Step 604 is performed; or else, Step 608 is performed.

Step 604: it is judged whether the transmission delay is less than or equal to maximum delay of uplink CoMP; if so, Step 605 is performed; or else, the flow is ended.

Step 605: the uplink CoMP is realized by adopting the joint interference rejection method.

Step 606: it is judged whether the first cell and the second cell belong to the same base band module; if so, Step 607 is performed; or else, Step 608 is performed.

Step 607: the uplink CoMP is realized by adopting the joint equalization mode, and then the flow is ended.

Step 608: the uplink CoMP is realized by adopting the joint soft bit combination mode, and then the flow is ended.

Whether for the distributed network or the centralized network, whether between the eNodeBs or in the eNodeB, whether in the base band module or between the base band modules, adopting the above method can adaptively select the most effective CoMP mode to enable the edge user to eliminate the inter-cell interference to the maximum, thereby improving the channel quality, obtaining the higher throughput, and improving the experience of the edge user. Besides, after the self-adaptive method is adopted, the whole throughput of the cell is improved due to the improvement of the throughput of the edge user.

In addition, when the uplink CoMP is realized by adopting the joint interference rejection method, according to the description of the embodiment 1, the anti-interference capability can be further improved, the channel quality can be further improved, and the experience of the edge user is improved.

The specific application process of the method of the present embodiment is introduced below by taking the serving cell and the cooperative cell for example. The process includes the following steps.
1. The mode for realizing the uplink CoMP is configured manually as "self-adaption".
2. The maximum delay ULCoMPMaxDelay of uplink CoMP is configured manually. The delay is set on the principle of the actual processing capacity of the system that can support the CoMP.
3. The maximum delay JointSoftCombineMaxDelay of "joint soft bit combination" is configured manually. The delay is set on the principle of actual processing capacity of the system that can support the joint soft bit combination, and satisfying the condition JointSoftCombineMaxDelay<ULCoMPMaxDelay.
4. After running normally, the system self-adaptively judges the mode that the cooperative cell and the serving cell perform the uplink CoMP. The judgement steps are as follows:
   Step 1: it is judged whether the cooperative cell and the serving cell needing to perform the uplink CoMP belong to the same eNodeB; if so, Step 2 is performed; or else, Step 7 is performed;
   Step 2: the transmission delay between the eNodeBs is detected;
   Step 3: it is judged whether the delay between the eNodeBs is not greater than ULCoMPMaxDelay; if so, Step 4 is performed; or else, Step 9 is performed;
   Step 4: it is judged whether the delay between the eNodeBs is not greater than JointSoftCombineMaxDelay; if so, Step 5 is performed; or else, Step 6 is performed;
   Step 5: the joint soft bit combination mode is adopted, and then Step 9 is performed;
   Step 6: the joint interference rejection mode is adopted, and then Step 9 is performed;
   Step 7: it is judged whether the cooperative cell and this cell needing to perform the uplink CoMP belong to the same base band module; if so, Step 8 is performed; or else, Step 5 is performed;
   Step 8: the joint equalization mode is adopted, and then Step 9 is performed; and
   Step 9: the judgement flow is ended.
5. the system performs the subsequent cooperative scheduling operation according to the determined mode for realizing the uplink CoMP, so as to realize the uplink CoMP.

### Embodiment 3

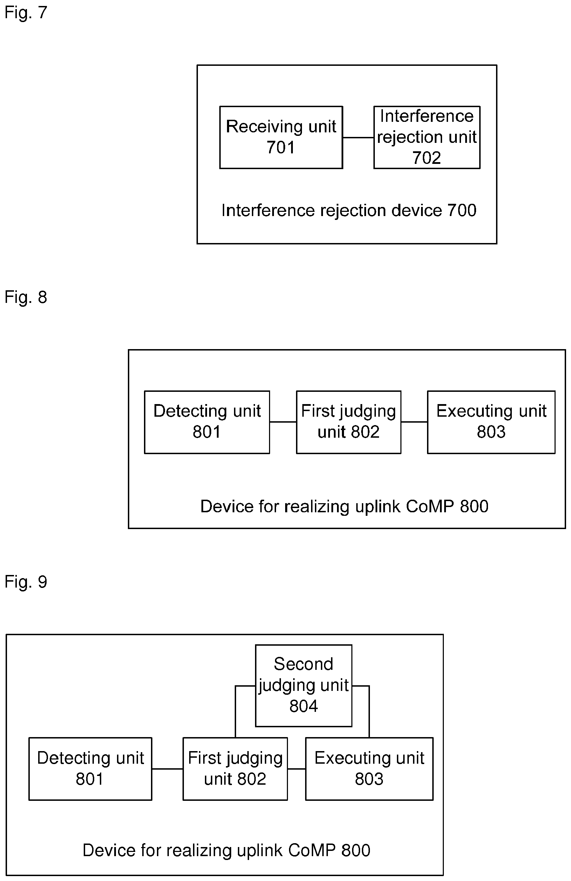

As shown in Fig. 7, the present embodiment provides a joint interference rejection device 700 for realizing the uplink CoMP, which includes: a receiving unit 701 and an interference rejection unit 702.

The receiving unit 701 is configured to receive the scheduling information of the second terminal sent by the second cell. The second terminal belongs to the second cell, and the scheduling information includes the resource block information and the pilot symbol position information allocated to the second terminal by the second cell.

The interference rejection unit 702 is configured to, when the first cell demodulates information sent by the first terminal of the first cell, eliminate the same-frequency interference of the second cell to the first cell by adopting the IRC algorithm according to the scheduling information.

By using the joint interference rejection device provided by the present embodiment, the first cell (the cooperative cell or the serving cell) has eliminated the interference of the interference source and achieves the purpose of increasing the edge user gain, so there is no need to send the cooperative message to the second cell (the serving cell or the cooperative cell) where the interference source is. In such a manner, message interaction between the X2 interfaces is reduced, and the delay required by CoMP is also reduced. The device can be applied to the distributed network. In addition, the first cell (the cooperative cell or the serving cell) can obtain the RB information and the pilot symbol position of the second terminal, so the first cell can determine the position of the interference source when performing the IRC algorithm. In such a manner, the effect of eliminating the interference of the interference source by adopting the IRC algorithm is enhanced, the anti-interference capability of CoMP achieves the best, and the cell edge throughput is further improved.

As shown in Fig. 8, the present embodiment also provides a device for realizing uplink CoMP 800, which includes: a detecting unit 801, a first judging unit 802 and an executing unit 803.

The detecting unit 801 is configured to, when the first cell and the second cell needing to perform the uplink CoMP do not belong to the same eNodeB, detect the transmission delay between the eNodeB to which the first cell belongs and the eNodeB to which the second cell belongs.

The first judging unit 802 is configured to judge whether the transmission delay satisfies the pre-set time condition.

The executing unit 803 is configured to, when the result of the first judging unit is yes, realize the uplink CoMP by adopting the joint interference rejection method in the embodiment 1.

Preferably, the pre-set time condition includes that: the transmission delay is greater than the second delay and less than or equal to the first delay, and the first delay is the pre-set maximum delay of uplink CoMP.

Preferably, the second delay is the pre-set maximum delay of adopting the joint soft bit combination mode to realize the uplink CoMP.

Preferably, the executing unit is configured to, when the transmission delay is less than or equal to the second delay, realize the uplink CoMP by adopting the joint soft bit combination mode.

As shown in Fig. 9, based on the device for realizing uplink CoMP, a second judging unit 804 can also be included.

The second judging unit 804 is configured to, when the first cell and the second cell needing to perform the uplink CoMP belong to the same eNodeB, judge whether the first cell and the second cell belong to the same base band module.

The executing unit 803 is further configured to, when the result of the second judging unit is yes, realize the uplink CoMP by adopting the pre-set joint equalization mode, and when the result of the second judging unit is no, realize the uplink CoMP by adopting the pre-set joint soft bit combination mode.

Whether for the distributed network or the centralized network, whether between the eNodeBs or in the eNodeB, whether in the base band module or between the base band modules, adopting the above device for realizing uplink CoMP can adaptively select the most effective CoMP mode to enable the edge user to eliminate the inter-cell interference to the maximum, thereby improving the channel quality, obtaining the higher throughput, and improving the experience of the edge user. Besides, after the self-adaptive method is adopted, the whole throughput of the cell is improved due to the improvement of the throughput of the edge user.

Both the receiving unit and the interference rejection unit in the joint interference rejection device provided by the embodiment of the disclosure can be realized by a processor in the cell. All of the detecting unit, the first judging unit, the second judging unit and the executing unit in the device for realizing uplink CoMP provided by the embodiment of the disclosure can be realized by the processor in the cell, and can also be realized by the specific logic circuit certainly. In the specific process of the embodiments, the processor can be a Central Processing Unit (CPU), a Microprocessor Unit (MPU), a Digital Signal Processor (DSP) or a Field Programmable Gate Array (FPGA).

Note that, in the embodiment of the disclosure, if being implemented in form of software function module and sold or used as an independent product, the above joint interference rejection method or the method for realizing uplink CoMP may also be stored in a computer-readable storage medium. Based on such an understanding, the substantive technical solutions of the embodiment of the disclosure or the part of which contributive to the conventional art may be implemented in form of software product, and the computer software product is stored in a storage medium. The storage medium may include a plurality of instructions configured to enable a computer device (which may be a personal computer, a server, network equipment or the like) to execute all or part of the method in each embodiment of the disclosure. The storage media include: various media capable of storing program codes, such as a U disk, a mobile hard disk, a Read-Only Memory (ROM), a magnetic disk, a compact disc, and so on. Therefore, embodiments of the disclosure are not limited to any specific hardware and software combinations.

Correspondingly, an embodiment of the disclosure further provides a computer storage medium, in which a computer program is stored, the computer program is used for performing the method for realizing uplink CoMP provided in each embodiment of the disclosure.

Correspondingly, an embodiment of the disclosure further provides a computer storage medium, in which a computer program is stored, the computer program is used for performing the joint interference rejection method provided in each embodiment of the disclosure.

### INDUSTRIAL APPLICABILITY

In the embodiment of the disclosure, the first cell receives the scheduling information of the second terminal sent by the second cell. The second terminal belongs to the second cell, and the scheduling information includes the RB information and the pilot symbol position information allocated to the second terminal by the second cell. When the first cell demodulates the information sent by the first terminal of the first cell, the same-frequency interference of the second cell to the first cell is eliminated by adopting the IRC algorithm according to the scheduling information.

## Claims

1. A joint interference rejection method for realizing uplink Coordinated Multi-Point Transmission/Reception (CoMP), **characterized in that** the joint interference rejection method comprises:
receiving, by a first cell, scheduling information of a second terminal sent by a second cell, wherein the second terminal belongs to the second cell, and the scheduling information comprises Resource Block (RB) information and pilot symbol position information allocated to the second terminal by the second cell (301); and
when the first cell demodulates information sent by the first terminal of the first cell, eliminating same-frequency interference of the second cell to the first cell by adopting an Interference Rejection Combining (IRC) algorithm according to the scheduling information (302).

2. A method for realizing uplink Coordinated Multi-Point Transmission/Reception (CoMP), comprising:
when a first cell and a second cell needing to perform the uplink CoMP do not belong to the same eNodeB, detecting a transmission delay between the eNodeB to which the first cell belongs and the eNodeB to which the second cell belongs (501);
judging whether the transmission delay satisfies a pre-set time condition (502); if so, realizing the uplink CoMP by adopting the joint interference rejection method according to claim 1 (503).

3. The method according to claim 2, wherein the pre-set time condition comprises that: the transmission delay is greater than a second delay and less than or equal to a first delay, and the first delay is the pre-set maximum delay of uplink CoMP.

4. The method according to claim 3, wherein the second delay is the pre-set maximum delay of adopting a joint soft bit combination mode to realize the uplink CoMP.

5. The method according to claim 4, wherein when the transmission delay is less than or equal to the second delay, realizing the uplink CoMP by adopting the joint soft bit combination mode.

6. The method according to any one of claims 2 to 5, further comprising: when the first cell and the second cell needing to perform the uplink CoMP belong to the same eNodeB, judging whether the first cell and the second cell belong to the same base band module; if so, realizing the uplink CoMP by adopting a pre-set joint equalization mode; or else, realizing the uplink CoMP by adopting the pre-set joint soft bit combination mode.

7. A joint interference rejection device for realizing uplink Coordinated Multi-Point Transmission/Reception (CoMP), **characterized in that** the joint interference rejection device comprises: a receiving unit and an interference rejection unit, wherein,
the receiving unit (701) is configured to receive scheduling information of a second terminal sent by a second cell, wherein the second terminal belongs to the second cell, and the scheduling information comprises Resource Block (RB) information and pilot symbol position information allocated to the second terminal by the second cell; and
the interference rejection unit (702) is configured to, when the first cell demodulates information sent by the first terminal of the first cell, eliminate same-frequency interference of the second cell to the first cell by adopting an Interference Rejection Combining (IRC) algorithm according to the scheduling information.

8. A device for realizing uplink Coordinated Multi-Point Transmission/Reception (CoMP), comprising: a detecting unit, a first judging unit and an executing unit, wherein,
the detecting unit (801) is configured to, when a first cell and a second cell needing to perform the uplink CoMP do not belong to the same eNodeB, detect a transmission delay between the eNodeB to which the first cell belongs and the eNodeB to which the second cell belongs;
the first judging unit (802) is configured to judge whether the transmission delay satisfies a pre-set time condition;
the executing unit (803) is configured to, when the result of the first judging unit is yes, realize the uplink CoMP by adopting the joint interference rejection method according to claim 1.

9. The device for realizing uplink CoMP according to claim 8, wherein the pre-set time condition comprises that: the transmission delay is greater than a second delay and less than or equal to a first delay, and the first delay is the pre-set maximum delay of uplink CoMP.

10. The device for realizing uplink CoMP according to claim 9, wherein the second delay is the pre-set maximum delay of adopting a joint soft bit combination mode to realize the uplink CoMP.

11. The device for realizing uplink CoMP according to claim 10, wherein the executing unit is configured to, when the transmission delay is less than or equal to the second delay, realize the uplink CoMP by adopting the joint soft bit combination mode.

12. The device for realizing uplink CoMP according to any one of claims 8 to 11, further comprising a second judging unit (804);
the second judging unit is configured to, when the first cell and the second cell needing to perform the uplink CoMP belong to the same eNodeB, judge whether the first cell and the second cell belong to the same base band module;
correspondingly, the executing unit is further configured to, when the result of the second judging unit is yes, realize the uplink CoMP by adopting a pre-set joint equalization mode, and when the result of the second judging unit is no, realize the uplink CoMP by adopting the pre-set joint soft bit combination mode.

13. A computer storage medium, in which computer executable instructions are stored, the computer executable instructions are used for performing the joint interference rejection method according to claim 1.

14. A computer storage medium, in which computer executable instructions are stored, the computer executable instruction are used for performing the method for realizing uplink Coordinated Multi-Point Transmission/Reception (CoMP) according to any one of claims 2 to 6.

## Patentansprüche

1. Gemeinsames Interferenzunterdrückungsverfahren zum Durchführen von Uplink-CoMP (Coordinated Multi-Point)-Sendungen/Empfang, **dadurch gekennzeichnet, dass** das gemeinsame Interferenzunterdrückungsverfahren umfasst:
Empfangen von durch eine zweite Zelle abgesandten Terminierungsinformationen eines zweiten Endgeräts durch eine erste Zelle, wobei das zweite Endgerät zur zweiten Zelle gehört, und die Terminierungsinformationen Resource-Block (RB)-Daten und Pilot-Symbol-Positionsdaten umfassen, die die zweite Zelle (301) dem zweiten Endgerät zugewiesen hat; und
wenn die erste Zelle Daten demoduliert, die vom ersten Endgerät der ersten Zelle abgesandt worden sind: Unterdrücken frequenzgleicher Interferenzen von der zweiten Zelle an die erste Zelle durch Übernehmen eines IRC (Interference Rejection Combining)-Algorithmus gemäß den Terminierungsdaten (302).

2. Verfahren zur Durchführung von CoMP-Sendungen/Empfang, umfassend:
wenn eine erste Zelle und eine zweite Zelle, die den Uplink-CoMP durchführen müssen, nicht zu demselben eNodeB gehören: Erkennen einer Übertragungsverzögerung zwischen dem eNodeB, dem die erste Zelle gehört, und dem eNodeB, dem die zweite Zelle gehört (501);
Beurteilen, ob die Übertragungsverzögerung eine vorgegebene Zeitbedingung (502) erfüllt; bejahendenfalls Durchführen des Uplink-CoMP durch Übernehmen des Verfahrens nach Anspruch 1 (503).

3. Verfahren nach Anspruch 2, wobei die vorgegebene Zeitbedingung umfasst, dass: die Übertragungsverzögerung länger als eine zweite Verzögerung und kürzer oder gleich einer ersten Verzögerung ist, und die erste Verzögerung die vorgegebene maximale Verzögerung des Uplink-CoMP ist.

4. Verfahren nach Anspruch 3, wobei die zweite Verzögerung die vorgegebene maximale Verzögerung bei der Übernahme eines gemeinsamen Soft-Bit-Kombinationsmodus zur Durchführung des Uplink-CoMP ist.

5. Verfahren nach Anspruch 4, wobei, wenn die Übertragungsverzögerung kürzer oder gleich der zweiten Verzögerung ist, Durchführen des Uplink-CoMP durch Übernehmen des gemeinsamen Soft-Bit-Kombinationsmodus.

6. Verfahren nach einem der Ansprüche 2 - 5, ferner umfassend: wenn die erste Zelle und die zweite Zelle, die den Uplink-CoMP durchführen müssen, zu demselben eNodeB gehören: Beurteilen, ob die erste Zelle und die zweite Zelle zu demselben Basisband-Modul gehören; bejahendenfalls Durchführen des Uplink-CoMP durch Übernehmen eines vorgegebenen gemeinsamen Angleichungsmodus, sonst Durchführen des Uplink-CoMP durch Übernehmen des vorgegebenen gemeinsamen Soft-Bit-Kombinationsmodus.

7. Gemeinsame Interferenzunterdrückungsvorrichtung zum Durchführen von Uplink-CoMP (Coordinated Multi-Point)-Sendungen/Empfang, **dadurch gekennzeichnet, dass** die gemeinsame Interferenzunterdrückungsvorrichtung umfasst: eine Empfangseinheit und eine Interferenzunterdrückungseinheit, wobei:
die Empfangseinheit (701) zum Empfangen von durch eine zweite Zelle abgesandten Terminierungsinformationen eines zweiten Endgeräts durch eine zweite Zelle konfiguriert ist, wobei das zweite Endgerät zur zweiten Zelle gehört, und die Terminierungsinformationen Resource-Block (RB)-Daten und Pilot-Symbol-Positionsdaten umfassen, die die zweite Zelle dem zweiten Endgerät zugewiesen hat; und
die Interferenzunterdrückungseinheit (702) zum Unterdrücken frequenzgleicher Interferenzen von der zweiten Zelle an die erste Zelle durch Übernehmen eines IRC-Algorithmus gemäß den Terminierungsdaten konfiguriert ist, wenn die erste Zelle Daten demoduliert, die vom ersten Endgerät der ersten Zelle abgesandt worden sind.

8. Vorichtung zur Durchführung von CoMP-Sendungen/Empfang, umfassend: eine Detektionseinheit, eine erste Beurteilungseinheit und eine Ausführungseinheit, wobei:
Die Detektionseinheit (801) zum Erkennen einer Übertragungsverzögerung zwischen dem eNodeB, dem die erste Zelle gehört, und dem eNodeB, dem die zweite Zelle gehört, wenn eine erste Zelle und eine zweite Zelle, die den Uplink-CoMP durchführen müssen, nicht zu demselben eNodeB gehören;
die erste Beurteilungseinheit (802) derart konfiguriert ist, dass sie beurteilt, ob die Übertragungsverzögerung eine vorgegebene Zeitbedingung erfüllt;
die Ausführungseinheit (803) zum Durchführen des Uplink-CoMP durch Übernehmen des Verfahrens nach Anspruch 1, wenn das von der ersten Beurteilungseinheit erreichte Ergebnis positiv ist.

9. Vorrichtung nach Anspruch 8, wobei die vorgegebene Zeitbedingung umfasst, dass: die Übertragungsverzögerung länger als eine zweite Verzögerung und kürzer oder gleich einer ersten Verzögerung ist, und die erste Verzögerung die vorgegebene maximale Verzögerung des Uplink-CoMP ist.

10. Vorrichtung nach Anspruch 9, wobei die zweite Verzögerung die vorgegebene maximale Verzögerung bei der Übernahme eines gemeinsamen Soft-Bit-Kombinationsmodus zur Durchführung des Uplink-CoMP ist.

11. Vorrichtung nach Anspruch 10, wobei die Ausführungseinheit zum Durchführen des Uplink-CoMP durch Übernehmen des gemeinsamen Soft-Bit-Kombinationsmodus konfiguriert ist, wenn die Übertragungsverzögerung kürzer oder gleich der zweiten Verzögerung ist.

12. Vorrichtung nach einem der Ansprüche 8 - 11, ferner umfassend eine zweite Beurteilungseinheit (804);
wobei die zweite Beurteilungseinheit derart konfiguriert ist, dass sie beurteilt, ob die erste Zelle und die zweite Zelle zu demselben Basisbandmodul gehören, wenn die erste Zelle und die zweite Zelle, die den Uplink-CoMP durchführen müssen, zu demselben eNodeB gehören;
und wobei die Ausführungseinheit dementsprechend ferner derart konfiguriert ist, dass sie den Uplink-CoMP durch Übernehmen eines vorgegebenen gemeinsamen Angleichungsmodus durchführt, wenn das von der zweiten Beurteilungseinheit erreichte Ergebnis positiv ist, und den Uplink-CoMP durch Übernehmen des vorgegebenen gemeinsamen Soft-Bit-Kombinationsmodus durchführt, wenn das von der zweiten Beurteilungseinheit erreichte Ergebnis negativ ist.

13. Computerdatenspeicher, in dem von einem Computer ausführbare Befehle gespeichert sind, wobei die von einem Computer ausführbaren Befehle zur Ausführung des Verfahrens nach Anspruch 1 verwendet werden.

14. Computerdatenspeicher, in dem von einem Computer ausführbare Befehle gespeichert sind, wobei die von einem Computer ausführbaren Befehle zur Ausführung des Verfahrens nach einem der Ansprüche 2 - 6 verwendet werden.

## Revendications

1. Procédé de rejet d'interférence de jonction pour la réalisation d'une Coordinated Multi-Point Transmission/Reception (CoMP) de liaison montante, **caractérisé en ce que** le procédé de rejet d'interférence de jonction comprend :
la réception, par une première cellule, d'informations de planification d'un deuxième terminal envoyées par une deuxième cellule, le deuxième terminal appartenant à la deuxième cellule et les informations de planification comprenant des informations Resource Block (RB) et des informations de positions de symboles pilotes allouées au deuxième terminal par la deuxième cellule (301) ; et
lorsque la première cellule démodule les informations envoyées par le premier terminal de la première cellule, l'élimination d'interférence de même fréquence de la deuxième cellule à la première cellule en adoptant un algorithme Interference Rejection Combining (IRC) selon les informations de planification (302).

2. Procédé de réalisation d'une Coordinated Multi-Point Transmission/Reception (CoMP) de liaison montante comprenant :
lorsqu'une première cellule et une deuxième cellule ayant besoin de réaliser la CoMP de liaison montante n'appartiennent pas au même eNodeB, la détection d'un retard de transmission entre l'eNodeB auquel la première cellule appartient et l'eNodeB auquel la deuxième cellule appartient (501) ;
évaluation si le retard de transmission satisfait une condition de temps prédéterminée (502) ; si c'est le cas, réalisation de la CoMP de liaison montante en adoptant le procédé de rejet d'interférence de jonction selon la revendication 1 (503).

3. Procédé selon la revendication 2, dans lequel la condition de temps prédéterminée comprend que : le retard de transmission est supérieur à un deuxième retard et inférieur ou égal à un premier retard et le premier retard est le retard maximum prédéterminé de la CoMP de liaison montante.

4. Procédé selon la revendication 3, dans lequel le deuxième retard est le retard maximum prédéterminé d'adoption d'un mode de combinaison binaire soft de jonction pour réaliser la CoMP de liaison montante.

5. Procédé selon la revendication 4, dans lequel, lorsque le retard de transmission est inférieur ou égal au deuxième retard, réalisation de la CoMP de liaison montante en adoptant le mode de combinaison binaire soft de jonction.

6. Procédé selon l'une des revendications 2 à 5, comprenant en outre : lorsque la première cellule et la deuxième cellule ayant besoin de réaliser la CoMP de liaison montante appartiennent au même eNodeB, évaluation sur la première cellule et la deuxième cellule appartiennent au même module de bande de base ; si c'est le cas, réalisation de la CoMP de liaison montante en adoptant un mode d'égalisation de jonction prédéterminé ; sinon, réalisation de la CoMP de liaison montante en adoptant le mode de combinaison binaire soft de jonction prédéterminé.

7. Dispositif de rejet d'interférence de jonction pour la réalisation d'une Coordinated Multi-Point Transmission/Reception (CoMP) de liaison montante, **caractérisé en ce que** le dispositif de rejet d'interférence de jonction comprend : une unité de réception et une unité de rejet d'interférence,
l'unité de réception (701) étant conçue pour recevoir des informations de planification d'un deuxième terminal envoyées par une deuxième cellule, le deuxième terminal appartenant à la deuxième cellule et les informations de planification comprenant des informations Resource Block (RB) et des informations de positions de symboles pilotes allouées au deuxième terminal par la deuxième cellule ; et
l'unité de rejet d'interférence (702) étant conçu, lorsque la première cellule démodule les informations envoyées par le premier terminal de la première cellule, pour éliminer l'interférence de même fréquence de la deuxième cellule à la première cellule en adoptant un algorithme Interference Rejection Combining (IRC) selon les informations de planification.

8. Dispositif pour la réalisation d'une Coordinated Multi-Point Transmission/Reception (CoMP) de liaison montante, comprenant : une unité de détection une première unité d'évaluation et une unité d'exécution,
l'unité de détection (801) étant conçue, lorsqu'une première cellule et une deuxième cellule ayant besoin de réaliser la CoMP de liaison montante n'appartiennent pas au même eNodeB, pour détecter un retard de transmission entre l'eNodeB auquel la première cellule appartient et l'eNodeB auquel la deuxième cellule appartient ;
la première unité d'évaluation (802) étant conçue pour évaluer si le retard de transmission satisfait une condition de temps prédéterminée ;
l'unité d'exécution (803) étant conçue, lorsque le résultat de la première unité d'évaluation est oui, pour réaliser la CoMP de liaison montante en adoptant le procédé de rejet d'interférence de jonction selon la revendication 1.

9. Dispositif pour la réalisation d'une CoMP de liaison montante selon la revendication 8, dans lequel la condition de temps prédéterminée comprend que : le retard de transmission est supérieur à un deuxième retard et inférieur ou égal à un premier retard et le premier retard est le retard maximum prédéterminé de la CoMP de liaison montante.

10. Dispositif pour la réalisation d'une CoMP de liaison montante selon la revendication 9, dans lequel le deuxième retard est le retard maximum prédéterminé d'adoption d'un mode de combinaison binaire soft de jonction pour réaliser la CoMP de liaison montante.

11. Dispositif pour la réalisation d'une CoMP de liaison montante selon la revendication 10, dans lequel l'unité d'exécution est conçu, lorsque le retard de transmission est inférieur ou égal au deuxième retard, pour réaliser la CoMP de liaison montante en adoptant le mode de combinaison binaire soft de jonction.

12. Dispositif pour la réalisation d'une CoMP de liaison montante selon l'une des revendications 8 à 11, comprenant en outre une deuxième unité d'évaluation (804) ;
la deuxième unité d'évaluation étant conçu, lorsque la première cellule et la deuxième cellule ayant besoin de réaliser la CoMP de liaison montante appartiennent au même eNodeB, pour évaluer si la première cellule et la deuxième cellule appartiennent au même module de bande de base ;
de manière correspondante, l'unité d'exécution étant en outre conçue, lorsque le résultat de la deuxième unité d'évaluation est oui, pour réaliser la CoMP de liaison montante en adoptant un mode d'égalisation de jonction prédéterminé et, lorsque le résultat de l'unité d'évaluation est non, pour réaliser la CoMP de liaison montante en adoptant le mode de combinaison binaire soft de jonction prédéterminé.

13. Support de stockage sur ordinateur dans lequel des instructions exécutables par un ordinateur sont stockées, les instructions exécutables par un ordinateur étant utilisées pour exécuter le procédé de rejet d'interférence de jonction selon la revendication 1.

14. Support de stockage sur ordinateur dans lequel des instructions exécutables par un ordinateur sont stockées, les instructions exécutables par un ordinateur étant utilisées pour exécuter le procédé de réalisation d'une Coordinated Multi-Point Transmission/Reception (CoMP) de liaison montante selon l'une des revendications 2 à 6.
